Europäisches Patentamt

European Patent Office

Office européen des brevets

(11) Veröffentlichungsnummer: **0 365 927**
**A2**

## (12) EUROPÄISCHE PATENTANMELDUNG

(21) Anmeldenummer: 89118921.9

(22) Anmeldetag: 12.10.89

(51) Int. Cl.⁵: **B32B 25/04**

(30) Priorität: 25.10.88 DE 3836251

(43) Veröffentlichungstag der Anmeldung:
02.05.90 Patentblatt 90/18

(84) Benannte Vertragsstaaten:
**DE FR GB IT**

(71) Anmelder: **BAYER AG**

**D-5090 Leverkusen 1 Bayerwerk(DE)**

(72) Erfinder: **Schnetger, Jochen, Dr.**
**Hollweg 13**
**D-5068 Odenthal(DE)**
Erfinder: **Obrecht, Werner, Dr.**
**Holderberger-Strasse 108**
**D-4130 Moers 2(DE)**

(54) **Vulkanisat-Verbundwerkstoffe und Verfahren zu ihrer Herstellung.**

(57) Epoxidierte Kautschuke eignen sich hervorragend dazu, Kautschuke unterschiedlicher Polarität miteinander zu verbinden; durch Vulkanisation derart hergestellter Verbunde erhält man Werkstoffe mit dauerhafter Haftung der Komponenten untereinander.

EP 0 365 927 A2

EP 0 365 927 A2

**Vulkanisat-Verbundwerkstoffe und Verfahren zu ihrer Herstellung**

Die Erfindung betrifft Vulkanisat-Verbundwerkstoffe, die Vulkanisate chemisch unterschiedlicher Kautschuke - vorzugsweise in schichtförmigen Aufbau - enthalten, und ein Verfahren zu ihrer Herstellung unter Verwendung von -meist als Zwischenschicht ausgebildetem - epoxidiertem Kautschuk.

Zu den wünschenswerten Eigenschaften von Kautschukvulkanisaten zählen beispielsweise Reißfestigkeit, hohe Reißdehnung, Abriebbeständigkeit, Tieftemperaturflexibilität, hohe Rückprallelastizität, geringe Durchlässigkeit für verschiedene Gase, Hitzebeständigkeit, niedrige Quellung in Ölen, Fetten und Kraftstoffen, Naßrutschfestigkeit und niedriger Rollwiderstand. Die Eigenschaften chemisch unterschiedlicher Kautschukvulkanisate können sich bekanntlich - abhängig von ihrer Zusammensetzung - beträchtlich unterscheiden.

Um die spezifischen Eigenschaften bekannter Kautschuke miteinander zu kombinieren, existieren prizipiell zwei Alternativen:

1. Man mischt Kautschuke unterschiedlicher Zusammensetzung, z. B. Naturkautschuk und Styrol/Butadien-Kautschuk. Diesen Weg beschreitet man beispielsweise bei der Herstellung von Laufflächen für Fahrzeugreifen.

2. Man formt aus unterschiedlichen Kautschuken Verbundwerkstoffe, vorzugsweise in Schichten, und vulkanisiert diesen Verbund. Nach diesem Prinzip fertigt man bestimmte Schläuche und Kraftfahrzeugreifen.

Voraussetzung für einen guten Verbund· zweier verschiedener Kautschuke (Alternative 2, s. o.) ist die Fähigkeit der Kautschuke, miteinander bei einer Covulkanisation zu reagieren, damit sich die einzelnen Lagen des vulkanisierten Verbunds bei mechanischer Beanspruchung nicht voneinander lösen. Außerdem ist es bei der Herstellung von Verbundwerkstoffen, die im allgemeinen manuell erfolgt, wichtig, daß die verschiedenen Kautschukschichten hinreichend stark aneinander kleben ("Konfektions-klebrigkeit" oder "tack").

Es hat sich nun in vielen Fällen gezeigt, daß sich Kautschuke umso besser für die Herstellung solcher Verbund-Vulkanisate eignen, je geringere Polaritätsunterschiede zwischen den Kautschuken dieses Verbunds bestehen. Man hat nach der herkömmlichen Methode daher regelmäßig Verbundwerkstoffe auf Basis verschiedener Kautschuke entweder aus unpolaren oder aus polaren Kautschuken aufgebaut.

In diesem Zusammenhang sollen unter unpolaren Kautschuken solche mit einer Ölquellung gemäß ASTM-D 2.000 - 80 unter Verwendung von ASTM-Öl Nr. 3 von über 80 Vol-% und unter polaren Kautschuken solche mit einer Ölquellung (bestimmt wie oben) von unter 80 Vol-% verstanden werden. Beispiele für unpolare Kautschuke sind Naturkautschuk, Polybutadien, Polyisopren, Styrol/Butadien-Copolymerisate, Ethylen/Propylen-Polymerisate; Beispiele für polare Kautschuke sind Polychloropren, chloriertes Polyethylen, chlorsulfoniertes Polyethylen, Nitrilkautschuk, voll- und teilhydrierte Nitrilkautschuke, Fluorkautschuke, Acrylatkautschuke sowie Kautschuke mit polaren Gruppen in den Hauptketten wie z. B. Siliconkautschuke und Polyetherkautschuke und Kautschuke auf Polyphosphazen-Basis.

Die oben geschilderte Maßnahme, Verbundwerkstoffe auf Basis verschiedener Kautschuke entweder aus unpolaren oder aus polaren Kautschuken aufzubauen, hat zwar in der Regel zu befriedigenden Ergebnissen geführt, stellt aber eine starke Beschränkung bei der Auswahl der in Frage kommenden Kautschuke dar; gute Verbundwerkstoffe aus unpolarem und polarem Kautschuk waren auf diese Weise nur in Spezialfällen möglich.

Überraschenderweise wurde nun gefunden, daß sich Kautschuke unabhängig von ihrer Polarität durch epoxidierten Kautschuk problemlos verbinden lassen und nach er folgter Vulkanisation dann Verbundwerkstoffe mit dauerhafter Haftung der Komponenten untereinander darstellen.

Gegenstand der Erfindung ist also ein Verfahren zur Herstellung von Vulkanisat-Verbundwerkstoffen, wonach man einen epoxidierten Kautschuk zwischen mindestens zwei Epoxidgruppen-freie Kautschuke plaziert und diesen Verbund vulkanisiert.

Epoxidierte Kautschuke im Sinne der Erfindung sind Kautschuke, deren C = C-Strukturen mindestens teilweise zu Oxirangruppen umgesetzt worden sind. Bevorzugte epoxidierte Kautschuke besitzen Epoxidäquivalente von 70 bis 5000, vorzugsweise von 100 bis 2500, insbesondere von 120 bis 1300. Das Epoxidäquivalent ist definiert als die Substanzmenge in Gramm, die 1 Äquivalent Epoxidgruppen enthält; 1 Äquivalent Epoxidgruppen ist 1 Mol Halogenwasserstoff äquivalent. Die Bestimmung des Epoxidäquivalents erfolgt in der Regel durch Addition von Chlorwasserstoff in Pyridin und Rücktitration des unverbrauchten Chlorwasserstoffs.

Bevorzugte Kautschuke für die Herstellung von epoxidierten Kautschuken sind solche mit Jodzahlen von 5 bis 470, vorzugsweise von 10 bis 470, insbesondere von 20 bis 470. Die Bestimmung der Jodzahlen erfolgt im allgemeinen durch Addition von Jodchlorid in Eisessig nach Wijs, DIN 53 241, Teil 1. Die Jodzahl

2

definiert die Jodmenge in Gramm, die von 100 g Substanz chemisch gebunden wird. Beispiele für bevorzugte Kautschuke für die Herstellung epoxidierter Kautschuke sind Poly-cis-isopren, Polybutadien, Styrol/Butadien-Kautschuke (SBR) mit Styrolgehalten von 18 bis 60, vorzugsweise von 20 bis 50, Gew.-%, Butadien/Acrylnitril-Copolymerisate (NBR) mit Acrylnitrilgehalten von 5 bis 60, vorzugsweise von 10 bis 50, Gew.-% und deren Teilhydrierungsprodukte mit Hydrierungsgraden der vom Butadien stammenden C = C-Doppelbindungen von 50 bis 95 %, sowie Ethylen/Propylen-Terpolymerisate mit Ethylidennorbornen, Dicyclopentadien usw. als Terkomponente.

Die Epoxidierung kann nach Prileschajew durch Einwirkung von Percarbonsäuren, z. B. von Peressig- oder Perbenzoesäure, auf die betreffenden Kautschuke in inerten Lösungsmitteln erfolgen. Besonders geeignete Epoxidierungsmittel sind Trifluorperessigsäure und insbesondere 3-Chlorperbenzoesäure; vergl. "Methoden der Organischen Chemie" (Houben-Weyl), Band E 20/Teil 3, Georg Thieme Verlag, Stuttgart/New York 1987, S. 2027.

Von epoxidiertem Naturkautschuk gibt es beispielsweise Handelsprodukte, die durch Epoxidierung von 25 % (ENR 25) bzw. von 50 % (ENR 50) der ursprünglich vorhandenen C = C-Doppelbindungen erhalten worden sind.

Erfindungsgemäß einzusetzende Epoxidgruppen-freie Kautschuke umfassen synthetisch hergestelltes Poly-cis-isopren, Naturkautschuk, Guayule-Kautschuk; Polybutadienkautschuke mit cis-1,4-Struktur-Gehalten von 20 bis 100 %, vorzugsweise von 30 bis 100 %, wie sie z. B. durch Butadienpolymerisation mit Hilfe von Katalysatoren auf Basis von Lithium, Nickel, Titan, Cobalt, Seltenen Erden, Uran erhalten werden können; Styrol/Butadien-Kautschuke (SBR) mit Gehalten an einpolymerisiertem Styrol von 18 bis 60, vorzugsweise 20 bis 50, Gew.-% und vornehmlich über 1,4-Polymerisation einpolymerisierten Einheiten des Butadiens, wie sie z. B. durch Lösungspolymerisation erhalten werden können. Eine besonders wichtige Klasse erfindungsgemäß einzusetzender Epoxidgruppen-freier Kautschuke sind Polychloroprenkautschuke, wie sie z. B. in "Methoden der organischen Chemie" (Houben-Weyl), Band E 20/Teil 2, Georg Thieme Verlag, Stuttgart/New York, 1987, S. 842 - 859, sowie Nitrilkautschuke, wie sie z.B. in Ullmanns Encyclopädie der technischen Chemie, Band 13, Verlag Chemie, Weinheim-New York 1977, S. 611-614, einschließlich voll- und teilhydrierter Nitrilkautschuke, wie sie z.B. in Die Angewandte Makromolekulare Chemie 145/146 (1986) 161-179 beschrieben sind.

Die Epoxidgruppen-freien Kautschuke können zwar in Form von Pulvern, Krümeln oder Granulaten eingesetzt werden; bevorzugt ist aber der Einsatz als Flächengebilde, so daß durch Verbinden mindestens zweier solcher - gegebenenfalls geformter - Flächengebilde ein schichtförmig aufgebauter Verbund entsteht, wobei die Schichtdicken in weiten Grenzen schwanken können, meist aber in der Größenordnung von 0,1 bis 5 cm liegen. Die Wahl der Menge des epoxidierten Kautschuks hängt naturgemäß von der Größe der Oberfläche der zu verbindenden Epoxidgruppen-freien Kautschuke ab. Bei Pulvern, Krümeln und Granulaten wird man die optimal wirksame Menge durch einige orientierende Versuche festlegen; sie liegen in der Regel bei 1 bis 100 %, vorzugsweise 5 bis 50 Gew.-%, bezogen auf das Gewicht der zu verbindenden Epoxidgruppenfreien Kautschuke.

Für die Herstellung von schichtförmigen Verbundwerkstoffen wird man vorzugsweise Zwischenschichten von epoxidiertem Kautschuk mit Dicken von 1 bis 20 mm verwenden.

Eine sehr interessante Anwendung kann die Erfindung bei der Herstellung von Fahrzeugreifen finden; gegen Fahrzeugreifen auf Polychloropren-Basis spricht ihr gegenüber herkömmlichen Reifen höheres Gewicht. Deshalb haben Polychloropren-Reifen keine Aussicht, sich auf dem Markt durchzusetzen. Die Erfindung gestattet nun, Polychloropren-Laufflächen mit konventionellen Karkassen zu kombinieren und führt so zu Reifen mit einer vorteilhaften Eigenschaftskombination aus Rollwiderstand, Abrieb und Naßrutschfestigkeit und mit dennoch akzeptablem Gewicht. Praktisch kann man so vorgehen, daß man auf eine konventionelle Karkasse auf Basis eines unvulkanisierten Kautschuks (z. B. aus Naturkautschuk, NBR, BR oder deren Mischungen) eine Schicht aus epoxidiertem Kautschuk aufkaschiert, darauf die Lauffläche aufbringt und den so erhaltenen Verbund vulkanisiert.

Die Vulkanisation kann in Gegenwart üblicher Vulkanisiermittel erfolgen; Beispiele hierfür umfassen elementaren Schwefel, Schwefelspender, Ethylenthioharnstoff, cyclische Thiuramdisufide, Peroxide, Vernetzerharze, Chinonderivate, Diisocyanate, Dithionaten, bifunktionelle Bunte-Salze), Diazoverbindungen, Dinitrosoverbindungen, Nitrene, Dithiole, Bisnitrilimine, Bishydrosilane. Vorteilhaft sind Vulkanisiermittel, die für jeden für die Herstellung des Verbunds verwendeten Kautschuk geeignet sind. Neben den Vulkanisiermitteln verwendet man gewöhnlich Vulkanisationsbeschleuniger, wie z. B. Thiuramderivate, Guanidin- und Mercapto- und Sulfenamidbeschleuniger (Thiazolderivate), daneben Aktivatoren wie Zinkoxid, Magnesiumoxid, Calciumoxid sowie Fettsäuren, wie z.B. Stearinsäure.

Füllstoffe können in üblicher Weise mitverwendet werden. Der bevorzugteste Füllstoff ist Ruß. Weichmacher, wie z. B. Mineralöl, können ebenfalls eingesetzt werden. Art und Menge der Füllstoffe und Weichmacher werden so gewählt, daß die Härte der Vulkanisate sowie die sonstigen gewünschten Eigenschaften, wie z. B. Abrieb, Rutschfestigkeit und Hysterese, den Praxisanforderungen genügen.

Stabilisatoren gegen thermischen und oxidativen Angriff können die Vulkanisate gegen Alterung schützen. Bevorzugte Stabilisatoren sind sterisch gehinderte Phenolderivate und Derivate des Phenylendiamins sowie Kondensationsprodukte von Anilinen und Ketonen.

Die Vulkanisation kann bei Temperaturen von 100 bis 200°C, vorzugsweise 130 bis 180°C, gegebenenfalls unter einem Druck von 10 bis 200 bar, erfolgen.

Beispiele

Verwendete Kautschukmischungen

Die Mengenangaben der Komponenten sind in Gewichtsteilen angegeben.

1. Naturkautschukmischung (NR)

100 Naturkautschuk mit einem Defo-Wert von 700
50 Ruß N-330
10 Kieselsäure
2,5 IPPD (N-Phenyl-N′-isopropyl-p-phenylendiamin)
6 Zinkoxid

3     **Resorcinkomponente** ⎫
4     **Methylen-Donor**     ⎬ **für Haftsystem**
⎭

2 DCBS (N,N-Dicyclohexyl-2-benzothiazylsulfenamid)
0,1 TMTM (Tetramethylthiurammonosulfid)
5,63 unlösl. Schwefel-Batch

2. Polychloroprenkautschukmischung (CR)

100 schwefelmodifiziertes Polychloropren
35 Ruß N-330
17 aromat. Mineralöl
2 Stearinsäure
4 Magnesiumoxid
2 Paraffin (Fp. 64 - 68°C)
0,5 ODPA (octyliertes Diphenylamin)
5 Zinkoxid

3. Mischung (ENR 50) auf Basis von epoxidiertem Kautschuk

    a) 100 Epoxidierter Kautschuk ENR 50
60 Ruß N-330
3 Aromat. Mineralöl
2 Stearinsäure
3 Harz
1,5 Paraffin (Fp. 64 - 68°C)
2,5 IPPD
1 TMQ (ϵ-2,2,4-Trimethyl-1,2-dihydrochinolin, polymerisiert)
5 Zinkoxid
0,9 MBS

4

0,1 TMTM

1,5 Schwefel

    b) Mischung (ENR 25) wie 3 a, jedoch anstelle von ENR 50 die gleiche Menge ENR 25.

Haftungsprüfung

Aus folgenden Schichten wurden Platten einer Größe von 200 x 200 mm hergestellt

|       | A      | B      |
|-------|--------|--------|
| 2 mm  | CR     | CR     |
| 1 mm  | ENR 50 | ENR 25 |
| 1 mm  | NR     | NR     |

Die Platten wurden 20 Minuten lang bie 150°C vulkanisiert. Aus den vulkanisierten Platten wurden Prüfkörper für Dauerknickermüdungstests nach DIN 53 542 ausgestanzt. Die Prüfkörper überstanden in beiden Fällen 300.000 Knickungen ohne Trennung der Schichten.

**Ansprüche**

1. Verfahren zur Herstellung von Vulkanisat-Verbundwerkstoffen, wonach man einen epoxidierten Kautschuk zwischen mindestens zwei Epoxidgruppen-freie Kautschuke plaziert und diesen Verbund vulkanisiert.

2. Verfahren nach Anspruch 1, wobei der epoxidierte Kautschuk ein epoxidierter Naturkautschuk ist.

3. Verfahren nach Ansprüchen 1 und 2, wobei der epoxidierte Kautschuk ein Epoxidäquivalent von 70 bis 5000 besitzt.

4. Verfahren nach Ansprüchen 1 bis 3, wonach als Epozidgruppen-freie Kautschuke ein polarer und ein unpolarer Kautschuk verwendet werden.

5. Verfahren nach Anspruch 4, wonach als polarer Kautschuk ein Polychloroprenkautschuk oder ein Nitrilkautschuk verwendet wird.

6. Verfahren nach Anspruch 4, wonach als unpolarer Kautschuk Naturkautschuk, Polybutadien oder Styrol/Butadien-Copolymere eingesetzt werden.

7. Verfahren nach Ansprüchen 1 bis 6, wonach bei einer Temperatur von 130 bis 180°C vulkanisiert wird.

8. Nach Verfahren gemäß Ansprüchen 1 bis 7 hergestellte Verbundwerkstoffe.

9. Nach Verfahren gemäß Ansprüchen 1 bis 7 hergestellte Fahrzeugreifen.